# EUROPÄISCHE PATENTSCHRIFT

(11) **EP 3 345 519 B1**
(45) Veröffentlichungstag und Bekanntmachung des Hinweises auf die Patenterteilung: **20.11.2019**
(21) Anmeldenummer: 18150520.7
(22) Anmeldetag: 07.01.2018
(51) Int. Cl.: A47J 37/07

(54) **ELEKTRISCHES GRILLGERÄT**
ELECTRIC GRILL DEVICE
GRIL ÉLECTRIQUE

(30) Priorität: 07.01.2017 DE 202017000078 U
(43) Veröffentlichungstag der Anmeldung: 11.07.2018
(73) Patentinhaber: Chal-Tec GmbH, 10179 Berlin (DE)
(72) Erfinder: RENNIES, Felix, 10585 Berlin (DE)
(74) Vertreter: Holz, Christian

(56) Entgegenhaltungen:
- EP-B1- 0 617 909
- DE-U1- 29 915 464
- DE-U1-202012 103 907
- US-A- 5 742 031
- US-B2- 8 084 719
- US-B2- 8 785 822
- Rommelsbacher ElektroHausgeräte GmbH: "Rommelsbacher BBQ 2002 Bedienungsanleitung", , 3. November 2014 (2014-11-03), Seiten 1-28, XP002779273, Gefunden im Internet: URL:https://www.rommelsbacher.de/fileadmin /bedienungsanleitungen/BBQ_2002.pdf [gefunden am 2018-03-19]

## Beschreibung

Die vorliegende Erfindung betrifft ein elektrisches Grillgerät gemäß des Oberbegriffs des Patentanspruchs 1.

Elektrische Grillgeräte üblicher Bauart weisen üblicherweise ein rahmenartiges Basisteil auf, in das eine wannenartige Schale gehängt werden kann. In diese Schale kann ein beispielsweise geschlängeltes Heizelement eingehängt werden. Oberhalb des Heizelements ist üblicherweise ein Grillrost angeordnet. In die wannenartige Schale kann Wasser als Kühlmittel zur Vermeidung von Überhitzung eingebracht werden. Weiter verhindert das eingebrachte Wasser eine Entzündung abtropfenden Fettes. Derartige elektrische Grillgeräte können auch ohne das rahmenartige Basisteil verwendet werden.

Ein derartiges elektrisches Grillgerät kann üblicherweise lediglich mittels einer vorbestimmten elektrischen Wärmeleistung mit einer vorbestimmten Temperatureinstellung betrieben werden, indem das Heizelement eingeschaltet wird und im Laufe des Betriebs, d.h. nach einer Aufwärmphase, die Temperatureinstellung einnimmt, die konstruktiv vorgegeben ist. Mit anderen Worten kann in diesem Fall durch Ein- und Ausschalten des Heizelements lediglich zwischen einem vorbestimmten Betrieb und dem ausgeschalteten Zustand unterschieden werden.

Weiter sind im Stand der Technik ähnliche elektrische Grillgeräte bekannt, welche ein Thermostat aufweisen um die Temperatur des Heizelements zu regeln. Das Thermostat befindet sich üblicherweise in einem mit dem Heizelement verbundenen Bedienteil. Das Heizelement wird üblicherweise in Form eines Rohrheizkörpers ausgebildet. In diesem Fall können unterschiedliche Temperatureinstellungen vorgenommen werden.

Bei der Zubereitung von Fleisch und ähnlichen Lebensmitteln ist häufig eine hohe Temperatur erforderlich. Lebensmittel wie beispielsweise Brot erfordern wiederum geringere Temperaturen in ihrer Zubereitung. Dies führt beim Grillen mit elektrischen Grillgeräten mit lediglich einer vorbestimmten Temperatureinstellung zu dem Problem, dass das Brot einer zu hohen Temperatur ausgesetzt wird, da die lediglich eine vorbestimmte Temperatureinstellung üblicherweise auf diejenigen Lebensmittel ausgelegt ist, welche eine höhere Zubereitungstemperatur erfordern. Somit sind derartige elektrische Grillgeräte für das Grillen von Brot nur bedingt geeignet. Insbesondere können z.B. Fleisch und Brot nicht zeitgleich auf dem elektrischen Grillgerät zubereitet werden, weil das Brot zu schnell fertig zubereitet wäre und nicht zeitgleich mit dem fertig zubereiteten Fleisch serviert werden könnte. Auch besteht die Gefahr, das Brot zu lange zuzubereiten und hierdurch ungenießbar werden zu lassen. Um dies zu vermeiden kann der Benutzer das Brot höchstens zeitlich versetzt auf den Grillrost legen, damit Brot und Fleisch möglichst zeitgleich fertig zubereitet sind. Dies kann einen erhöhten Aufwand für den Benutzer bedeuten. In jedem Fall ist das Brot jedoch häufiger hinsichtlich seines Zubereitungszustands zu überprüfen sowie üblicherweise häufiger zu wenden.

Dieser erhöhte Aufwand kann auch durch die Verwendung eines elektrischen Grillgeräts mit einstellbarer Grilltemperatur nicht vermieden werden. Wird die Temperatureinstellung so gewählt, dass die Zubereitungstemperatur von Fleisch erreicht werden kann, ergibt sich die zuvor beschriebene Situation. Wird die Temperatureinstellung so gewählt, dass die Zubereitungstemperatur von Brot erreicht werden kann, dann ist die Grilltemperatur für die Zubereitung von Fleisch zu gering, so dass das Fleisch nicht genießbar zubereitet werden kann sowie nicht fertig zubereitet ist, wenn das Brot vom Grillrost genommen und serviert werden kann.

Ferner sind bekannte elektrische Grillgeräte hinsichtlich ihrer Temperatur zwar geeignet, Fleisch genießbar zuzubereiten, jedoch können für die Zubereitung von Fleisch sehr hohe optimale Temperaturen nicht erreicht werden, weil diese für die übrigen Lebensmittel zu hoch wären.

Das DE 299 15 464 U1 beschreibt einen Elektrogrill mit einem Gehäuse, mit mindestens zwei elektrischen Heiz-Elementen, die an dem Gehäuse angeordnet und unabhängig voneinander regelbar sind, und mit einem Rost, der benachbart zu den mindestens zwei Heiz-Elementen angeordnet und durch das Gehäuse abgestützt ist. Die beiden Heiz-Elemente sind identisch ausgebildet und nebeneinander innerhalb einer gemeinsamen horizontalen Ebene angeordnet.

Die US 8 785 822 B2 beschreibt einen Grill umfassend eine erste und eine zweite elektrothermische Röhre, die jeweils mit einer externen Stromversorgung durch eine Temperatursteuereinheit verbunden sind. Die beiden Röhren sind innerhalb einer gemeinsamen horizontalen Ebene angeordnet, wobei die zweite Röhre von der ersten Röhre umgeben wird. Mindestens ein regionaler Abstand zwischen der ersten und zweiten elektrothermischen Röhre ist kleiner als der andere und der Bereich bildet einen regionalen Hochtemperaturbereich. Wenn die erste und zweite elektrothermische Röhre gleichzeitig arbeiten, steigt die Temperatur des regionalen Hochtemperaturbereichs schnell an, wodurch Nahrungsmittel schnell erhitzt werden können und die Heizzeit verkürzt werden kann. Wenn die Hochtemperaturfunktion ausgeschaltet ist, kann der Stromverbrauch des Grills reduziert werden, wodurch elektrische Energie gespart wird und unterschiedliche Kochbedürfnisse verschiedener Lebensmittel erfüllt werden können.

Die US 5 742 031 A beschreibt ein Kochfeld mit drei Kochfeldern, von denen ein Kochfeld ein Grillelement aufweist. Das Grillelement weist ein Grillheizelement auf, welches zweiteilig ausgebildet ist. Beide Grillheizelemente sind im Wesentlichen geschlängelt und hintereinander innerhalb einer gemeinsamen horizontalen Ebene angeordnet. Beide Grillheizelemente werden über einen gemeinsamen Anschlussblock betrieben, von dem sie sich im Wesentlichen in der gemeinsamen horizontalen Ebene weg erstrecken. Dabei ist ein erstes Grillheizelement zwischen einem zweiten Grillheizelement und dem Anschlussblock angeordnet, so dass vom Anschlussblock aus betrachtet eine dem Anschlussblock zugewandte Grillzone durch das erste Grillheizelement und einem dem Anschlussblock abgewandte Grillzone durch das zweite Grillheizelement ausgebildet wird. Das zweite Grillheizelement verläuft abschnittsweise zwischen unterhalb des ersten Grillheizelements, um an diesem vorbeigeführt zu werden und die zuvor beschriebene Anordnung hintereinander innerhalb der gemeinsamen horizontalen Ebene zu ermöglichen.

Eine Aufgabe der vorliegenden Erfindung ist es, ein elektrisches Grillgerät der eingangs beschriebenen Art bereit zu stellen, so dass die zuvor beschriebenen Nachteile überwunden oder zumindest reduziert werden können. Insbesondere sollen die Zubereitungsmöglichkeiten eines derartigen elektrischen Grillgeräts verbessert werden. Ganz besonders soll eine Möglichkeit geschaffen werden, mittels eines derartigen elektrischen Grillgeräts verschiedene Lebensmittel, welche unterschiedlich hohe Temperaturen zur Zubereitung erfordern, zeitgleich zubereiten zu können. Zumindest soll eine Alternative zu derartigen elektrischen Grillgeräten geschaffen werden.

Die Aufgabe wird erfindungsgemäß durch ein elektrisches Grillgerät mit den Merkmalen des Patentanspruchs 1 gelöst. Vorteilhafte Weiterbildungen sind in den Unteransprüchen beschrieben.

Somit betrifft die vorliegende Erfindung ein elektrisches Grillgerät mit wenigstens einem Grillrost, welcher ausgebildet ist, Grillgut zur Zubereitung aufzunehmen. Als Grillgut werden insbesondere jegliche Lebensmittel angesehen, welche durch Grillen für den menschlichen Verzehr zubereitet werden können. Dies können insbesondere Fleisch, Fisch, Gemüse sowie Brot sein.

Das elektrische Grillgerät weist wenigstens ein erstes elektrisches Heizelement auf, welches ausgebildet ist, wenigstens eine erste Grillzone des Grillrosts zumindest abschnittweise derart zu erwärmen, so dass das Grillgut in der ersten Grillzone des Grillrosts mit einer ersten elektrischen Wärmeleistung zubereitet werden kann. Unter einem elektrischen Heizelement ist ein Element zu verstehen, welches durch die Zufuhr von elektrischer Energie mittels Stromwärmeverlusten erwärmt werden und Wärme an die Umgebung abgeben kann.

Dabei ist es bei den eingangs beschriebenen elektrischen Grillgeräten bekannt, ein derartiges erstes elektrisches Heizelement derart anzuordnen, dass die von dem ersten elektrischen Heizelement im Betrieb abgegebene Wärme durch das Grillrost hindurch das sich auf dem Grillrost befindliche Grillgut -je nach abgegebener elektrischer Wärmeleistung - erwärmen bzw. erhitzen und hierdurch zubereiten kann. Der Abschnitt des Grillrosts, welchem von dem ersten elektrischen Heizelement eine zur Zubereitung des Grillguts geeignete elektrische Wärmeleistung zugeführt werden kann, kann als erste Grillzone des Grillrosts bezeichnet werden. Die entsprechende elektrische Wärmeleistung kann als erste elektrische Wärmeleistung bezeichnet werden.

Das elektrische Grillgerät weist wenigstens ein zweites elektrisches Heizelement auf, wobei das erste elektrische Heizelement und das zweite elektrische Heizelement ausgebildet sind, wenigstens eine zweite Grillzone des Grillrosts zumindest abschnittweise gemeinsam derart zu erwärmen, so dass das Grillgut in der zweiten Grillzone des Grillrosts mit einer zweiten elektrischen Wärmeleistung zubereitet werden kann.

Mit anderen Worten ist das zweite elektrische Heizelement relativ zu dem ersten elektrischen Heizelement und zu dem Grillrost derart angeordnet, so dass sich wenigstens zwei Grillzonen des Grillrosts ausbilden können. Eine erste Grillzone des Grillrosts wird dort ausgebildet, wo der Grillrost - wie bisher bekannt - lediglich von dem ersten elektrischen Heizelement mit einer ersten elektrischen Wärmeleistung erwärmt bzw. erhitzt werden kann. Hierdurch wird bei Betrieb des zweiten elektrischen Heizelements jedoch eine zweite Grillzone des Grillrosts ausgebildet, welche sowohl von dem ersten elektrischen Heizelement als auch zusätzlich von dem zweiten elektrischen Heizelement mit einer zweiten elektrischen Wärmeleistung erwärmt bzw. erhitzt werden kann. Somit erhält die zweite Grillzone des Grillrosts eine zweite höhere elektrische Wärmeleistung als die erste Grillzone des Grillrosts, welche aus der Kombination der elektrischen Wärmeleistungen der beiden Heizelemente resultiert.

Wird das erste elektrische Heizelement alleinig betrieben, so weist das Grillrost lediglich die erste Grillzone auf, welche sich über den Grillrost erstreckt, sofern dieser von dem ersten elektrischen Heizelement erwärmt bzw. erhitzt werden kann. Wird das zweite elektrische Heizelement zusätzlich betrieben, so reduziert sich die Fläche der ersten Grillzone des Grillrosts um den Bereich, welcher dann durch die zweite Grillzone des Grillrosts eingenommen wird.

Hierbei liegt die Erkenntnis zugrunde, dass elektrische Grillgeräte üblicher Bauform keine Möglichkeit aufweisen, verschiedene Temperaturen in unterschiedlichen Zonen der Grillfläche auszuprägen. Entweder können bekannte elektrische Grillgeräte lediglich eingeschaltet werden, so dass die elektrische Wärmeleistung im Betrieb konstruktiv vorgegeben ist, oder es kann die elektrische Wärmeleistung im Betrieb eingestellt werden. In jedem Fall ist die elektrische Wärmeleistung jedoch über die gesamte Fläche des Grillrosts im Wesentlichen gleich. Dementsprechend weisen bekannte elektrische Grillgeräte lediglich eine erste Grillzone des Grillrosts mit einer ersten elektrischen Wärmeleistung auf. Somit ist die gleichzeitige Zubereitung von Lebensmitteln mit unterschiedlichen Anforderungen an ihre Zubereitungstemperatur nicht möglich.

Es wird daher das zweite elektrische Heizelement vorgesehen, durch dessen Betrieb bei Bedarf ein Teil der bekannten ersten Grillzone des Grillrosts in eine zweite Grillzone des Grillrosts gewandelt werden kann, welche zusätzlich zur Wärmeleistung des ersten Heizelements auch die Wärmeleistung des zweiten Heizelements erhält. Hierdurch kann die erste Grillzone hinsichtlich ihrer ersten elektrischen Wärmeleistung z.B. für die Zubereitung von Brot, Gemüse, Fisch und dergleichen ausgelegt und genutzt werden. Die höhere zweite elektrische Wärmeleistung der zweiten Grillzone des Grillrosts, welche aus der Überlagerung der elektrischen Wärmeleistungen des ersten elektrischen Heizelements und des zweiten elektrischen Heizelements resultiert, kann auf die Zubereitung von z.B. Fleisch ausgelegt werden. Somit können derartige Lebensmittel als Grillgut mittels desselben elektrischen Grillgeräts zeitgleich und parallel zueinander auf verschiedenen Bereichen der Grillfläche des Grillrosts mit unterschiedlichen und jeweils geeigneten Temperaturen zubereitet werden.

Vorzugsweise kann das zweite elektrische Heizelement eine größere Leistungsdichte als das erste elektrische Heizelement aufweisen, damit die Anordnung des zusätzlichen zweiten elektrischen Heizelements möglichst platzsparend vorgenommen werden kann. Hierdurch können insbesondere bekannte derartige elektrische Grillgeräte durch den Austausch des bisherigen ersten elektrischen Heizelements gegen ein erstes und zweites Heizelement gemäß der vorliegenden Erfindung umgerüstet werden.

Erfindungsgemäß ist das zweite elektrische Heizelement vollständig unterhalb des ersten elektrischen Heizelements angeordnet. Auf diese Art und Weise kann die erste elektrische Wärmeleistung, welche durch den alleinigen Betrieb des ersten elektrischen Heizelements hervorgerufen werden kann, möglichst nah und direkt unterhalb des Grillrosts erzeugt werden, so dass die erste elektrische Wärmeleistung möglichst effizient auf das Grillgut wirken kann. Um dies zu ermöglichen, kann das zweite elektrische Heizelement dem Grillrost abgewandt unterhalb des ersten elektrischen Heizelements angeordnet werden.

Alternativ ist das zweite elektrische Heizelement vollständig oberhalb des ersten elektrischen Heizelements angeordnet. Hierdurch kann die zusätzliche elektrische Wärmeleistung, welche durch das zweite elektrische Heizelement erzeugt werden kann, möglichst nah an den Grillrost und damit an das Grillgut herangebracht werden, so dass eine besonders hohe Hitze auf das Grillgut in der zweiten Grillzone des Grillrosts wirken kann. Dies kann für die Zubereitung von Fleisch vorteilhaft sein. Auch kann das zweite elektrische Heizelement in diesem Fall vergleichsweise energieeffizient ausgelegt bzw. betrieben werden.

Gemäß einem Aspekt der vorliegenden Erfindung ist das zweite elektrische Heizelement zumindest abschnittsweise, vorzugsweise vollständig, parallel zu dem ersten elektrische Heizelement angeordnet. Üblicherweise werden Grillroste ebenflächig ausgebildet und im Betrieb angeordnet, damit das Grillgut nicht vom Grillrost herunterrutschen oder -rollen kann. Entsprechend wird üblicherweise auch das erste elektrische Heizelement parallel zum Grillrost ausgerichtet, um seine elektrische Wärmeleistung möglichst gleichmäßig durch den Grillrost hindurch an das Grillgut abgeben zu können. Aus diesem Grunde ist es vorteilhaft, auch das zweite elektrische Heizelement parallel zu dem ersten elektrischen Heizelement anzuordnen, damit auch die zweite elektrische Wärmeleistung möglichst gleichmäßig erzeugt und durch das Grillrost hindurch an das Grillgut abgeben werden kann.

Alternativ könnte das zweite elektrische Heizelement zumindest abschnittsweise sowohl unterhalb als auch oberhalb des ersten elektrischen Heizelements angeordnet sein. Mit dieser Konstruktionsvariante können die zuvor beschriebenen Vorteile in einem gewissen Maße kombiniert werden, wobei das zweite elektrische Heizelement dennoch konstruktiv vergleichsweise flach ausgebildet werden kann, da die wärmeabgebende Fläche des zweiten elektrischen Heizelements durch die doppelte Anordnung vergleichsweise groß ausgebildet sein kann.

Gemäß einem weiteren Aspekt der vorliegenden Erfindung ist das zweite elektrische Heizelement zumindest abschnittsweise zentrisch zu dem ersten elektrischen Heizelement angeordnet. Diesem Aspekt der vorliegenden Erfindung liegt die Erkenntnis zugrunde, dass bekannte elektrische Grillgeräte in ihrer Leistung und Wärmeentwicklung üblicherweise dadurch beschränkt sind, dass das rahmenartige Basisteil als leicht berührbare Fläche in seiner Oberflächentemperatur durch entsprechende Sicherheitsnormen beschränkt ist. Eine hohe Grilltemperatur kann schnell zu einer Überhitzung führen. Hohe Temperaturen sind beispielsweise bei der Zubereitung von Fleisch erforderlich. Um ideale Grilltemperaturen für die Zubereitung von Fleisch auf der gesamten Grillfläche zu erreichen wäre eine sehr hohe elektrische Wärmeleistung nötig und das Basisteil würde gefährlich heiß werden. Um somit erfindungsgemäß dennoch die für die Zubereitung von z.B. Fleisch günstige hohe zweite elektrische Wärmeleistung erzeugen zu können, ohne das elektrische Grillgerät unzulässig stark zu erwärmen, kann das zweite elektrische Heizelement daher zumindest abschnittsweise zentrisch zu dem ersten elektrischen Heizelement angeordnet werden, so dass die elektrische Wärmeleistung des zweiten elektrischen Heizelements vom Basisteil und dergleichen möglichst ferngehalten werden kann.

Gemäß einem weiteren Aspekt der vorliegenden Erfindung ist das zweite elektrische Heizelement zumindest abschnittsweise zu einem Basisteil des elektrischen Grillgeräts derart beabstandet angeordnet, so dass eine Überhitzung des Basisteils durch den Betrieb des zweiten elektrischen Heizelements verhindert werden kann. Unabhängig von der zuvor beschriebenen zentrischen Anordnung des zweiten elektrischen Heizelements gegenüber dem ersten elektrischen Heizelement kann gemäß dieses Aspekts der vorliegenden Erfindung das zweite elektrische Heizelement insgesamt derart angeordnet werden, so dass eine Überhitzung des Basisteils durch den Betrieb des zweiten elektrischen Heizelements verhindert werden kann. Dies kann unabhängig von der Anordnung des ersten elektrischen Heizelements erfolgen. Insbesondere kann auf diese Art und Weise das zweite elektrische Heizelement gegenüber einem Untergrund und bzw. oder gegenüber einem Rand des elektrischen Grillgeräts wie z.B. dessen wannenartiger Schale ausreichend beabstandet angeordnet werden.

Gemäß einem weiteren Aspekt der vorliegenden Erfindung ist bzw. sind das erste elektrische Heizelement und bzw. oder das zweite elektrische Heizelement als Rohrheizkörper ausgebildet. Dies kann die Umsetzung von elektrischen Heizelementen für ein elektrisches Grillgerät vereinfachen.

Gemäß einem weiteren Aspekt der vorliegenden Erfindung ist bzw. sind das erste elektrische Heizelement und bzw. oder das zweite elektrische Heizelement lediglich ein-/ausschaltbar ausgebildet. Mit anderen Worten ist bzw. sind das erste elektrische Heizelement und bzw. oder das zweite elektrische Heizelement jeweils konstruktiv für lediglich eine vorbestimmte elektrische Wärmeleistung ausgelegt, welche durch das Einschalten bewirkt werden kann. Dies kann die Elektronik zur Umsetzung des ersten elektrischen Heizelements und bzw. oder des zweiten elektrischen Heizelements entsprechend einfach und damit auch kostengünstig und bzw. oder platzsparend werden lassen.

Gemäß einem weiteren Aspekt der vorliegenden Erfindung ist bzw. sind das erste elektrische Heizelement und bzw. oder das zweite elektrische Heizelement, vorzugsweise mittels jeweils eines Thermostaten, in der Wärmeleistung einstellbar ausgebildet. Dies kann es dem Benutzer ermöglichen, das erste elektrische Heizelement und bzw. oder das zweite elektrische Heizelement nicht nur einzuschalten, sondern im eingeschalteten Betrieb auch dessen elektrische Wärmeleistung einzustellen. Hierdurch kann der Benutzer einen gesteigerten Einfluss auf die Zubereitung des Grillguts nehmen, was das Ergebnis der Zubereitung verbessern kann.

Gemäß einem weiteren Aspekt der vorliegenden Erfindung sind das erste elektrische Heizelement und das zweite elektrische Heizelement ausgebildet, unabhängig voneinander betrieben werden zu können. Dies gilt sowohl für zwei Heizelemente, welche unabhängig voneinander lediglich ein- und ausgeschaltet werden können. Dies gilt auch für zwei Heizelemente, welche im eingeschalteten Betrieb jeweils in ihrer elektrischen Wärmeleistung vom Benutzer eingestellt werden können. Dies gilt ferner, falls ein Heizelement lediglich ein- und ausgeschaltet und das anderer Heizelement im eingeschalteten Betrieb in seiner elektrischen Wärmeleistung vom Benutzer eingestellt werden kann. Auf diese Art und Weise können die Möglichkeiten für den Benutzer weiter erhöht werden, die elektrische Wärmeleistung, welche auf das Grillgut wirken kann, zu beeinflussen. Dies kann das Ergebnis der Zubereitung verbessern.

Gemäß einem weiteren Aspekt der vorliegenden Erfindung sind das erste elektrische Heizelement und das zweite elektrische Heizelement zur Erzeugung der gleichen elektrischen Wärmeleistung ausgebildet. Dies kann die Umsetzung eines erfindungsgemäßen elektrischen Grillgeräts vereinfachen und bzw. oder kostengünstiger werden lassen, da gleiche bzw. gleichartige Heizelemente sowie ggfs. entsprechende Elektroniken verwendet werden können.

Gemäß einem weiteren Aspekt der vorliegenden Erfindung sind das erste elektrische Heizelement und das zweite elektrische Heizelement zur Erzeugung unterschiedlicher elektrischen Wärmeleistungen ausgebildet. Hierdurch können die Gestaltungsmöglichkeiten erhöht werden, eine zweite elektrische Wärmeleistung für die zweite Grillzone des Grillrosts zu erzeugen, welche für die Zubereitung von z.B. Fleisch vorteilhaft sein kann.

Gemäß einem weiteren Aspekt der vorliegenden Erfindung ist das zweite elektrische Heizelement zur Erzeugung einer geringeren elektrischen Wärmeleistung als das erste elektrische Heizelement ausgebildet. Diesem Aspekt der vorliegenden Erfindung liegt die Erkenntnis zugrunde, dass mittels des ersten elektrischen Heizelements üblicherweise für die erste Grillzone des Grillrosts bereits eine vergleichbar hohe Wärme erzeugt wird. Daher ist lediglich eine geringere zusätzliche elektrische Wärmeleistung durch das zweite elektrische Heizelement erforderlich, um mit der resultierenden zweiten elektrischen Wärmeleistung in der zweiten Grillzone des Grillrosts eine ausreichende Erwärmung bzw. Erhitzung zu erreichen, welche z.B. für die Zubereitung von Fleisch als besonders geeignet angesehen werden kann. Daher kann die elektrische Wärmeleistung des zweiten elektrischen Heizelements geringer als die elektrische Wärmeleistung des ersten elektrischen Heizelements ausgebildet sein.

Gemäß einem weiteren Aspekt der vorliegenden Erfindung bilden das erste elektrische Heizelement und das zweite elektrische Heizelement, vorzugsweise mit einem gemeinsamen Bedienteil, eine entnehmbare Einheit, welche ausgebildet ist, in ein Basisteil des elektrischen Grillgeräts eingehängt zu werden. Auf diese Art und Weise können die beiden elektrischen Heizelemente z.B. zum Reinigen aus dem elektrischen Grillgerät entnommen werden. Ferner kann ein bekanntes elektrisches Grillgerät durch den Austausch der Heizelemente in ein erfindungsgemäße elektrisches Grillgerät umgerüstet werden.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen elektrischen Grillgeräts;
- Fig. 2: eine Explosionsdarstellung der Fig. 1; und
- Fig. 3: eine Detailansicht der beiden elektrischen Heizelemente des erfindungsgemäßen elektrischen Grillgeräts.

Die o.g. Figuren werden in kartesischen Koordinaten betrachtet. Es erstreckt sich eine Längsrichtung X, welche auch als Tiefe X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann.

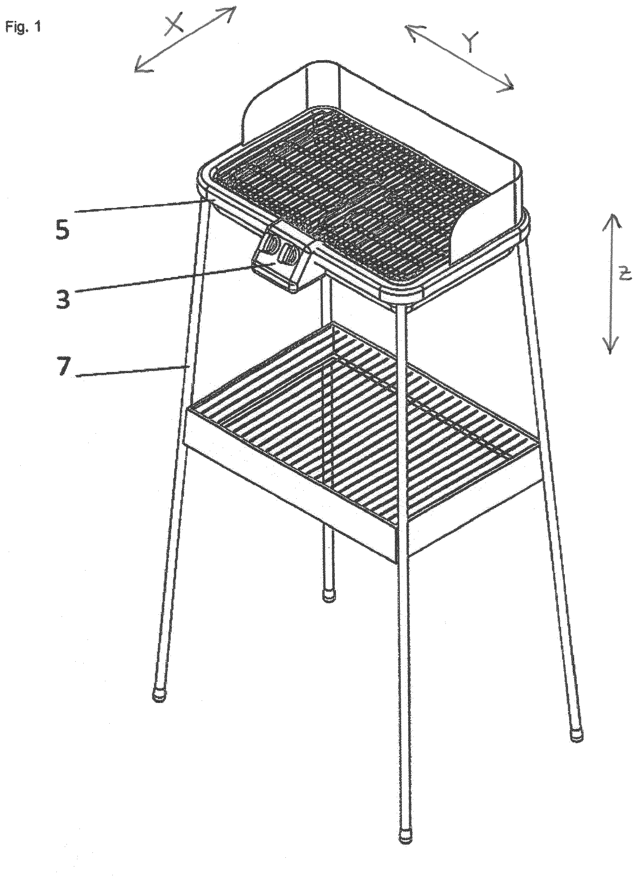

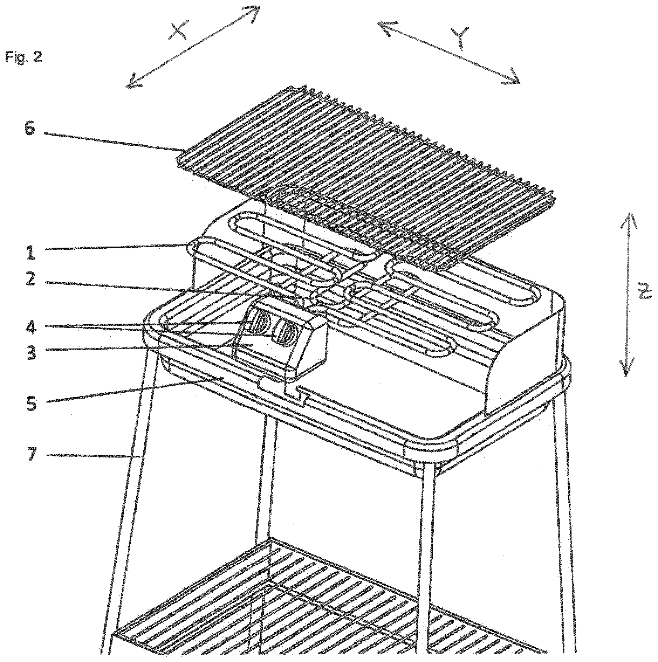

Ein erfindungsgemäßes elektrisches Grillgerät weist ein Basisteil 5 mit einer Auffangschale auf. Das Basisteil 5 kann direkt auf einem Untergrund aufgestellt oder, wie in den Fig. 1 und 2 dargestellt, auf einen Ständer 7 aufgesetzt werden. Auf das Basisteil 5 kann ein Grillrost 6 aufgelegt werden, um den Innenraum des Basisteils 5 bzw. der Auffangschale nach oben hin abzuschließen. Innerhalb des Basisteils 5 bzw. der Auffangschale können erfindungsgemäß zwei elektrische Heizelemente 1, 2 miteinander angeordnet werden, wie im Folgenden näher beschrieben wird. Die beiden elektrischen Heizelemente 1, 2 sind über ein gemeinsames Bedienteil 3 miteinander verbunden, so dass die beiden elektrischen Heiz-elemente 1, 2 von einem Benutzer durch Handhabung des Bedienteils 3 zum Gebrauch in die Auffangschale des Basisteils 5 eingelegt und z.B. zur Reinigung entnommen werden können. Im Betrieb werden die beiden elektrischen Heizelemente 1, 2 von oben durch den Grillrost 6 abgedeckt, so dass Grillgut, welches von einem Benutzer auf den Grillrost 6 gelegt wird, von unten durch die elektrische Wärmeleistungen der beiden elektrischen Heizelemente 1, 2 erwärmt bzw. erhitzt und hierdurch zubereitet werden kann..

Die beiden elektrischen Heizelemente 1, 2 sind erfindungsgemäß dazu vorgesehen, auf dem Grillrost 6 im Betrieb zwei Grillzonen A, B auszubilden. Hierzu erstreckt sich das erste elektrische Heizelement 1 im Wesentlichen über die gesamte Fläche des Grillrosts 6. Das erste elektrische Heizelement 1 ist dazu ausgebildet, eine maximale elektrische Wärmeleistung abzugeben, welcher über einen entsprechenden Thermostaten 4 des Bedienteils 3 für das erste elektrische Heizelement 1 vom Benutzer eingestellt werden kann. Wird das erste elektrische Heizelement 1 alleinig, wie bisher bekannt, betrieben, so entspricht die elektrische Wärmeleistung des ersten elektrischen Heizelements 1, welche z.B. maximal ca. 2.000 W betragen kann, der ersten elektrischen Wärmeleistung der ersten Grillzone A des Grillrosts 6, wobei sich die erste Grillzone A im Wesentlichen über die gesamte Fläche des Grillrosts 6 erstreckt.

Erfindungsgemäß ist zusätzlich das zweite elektrische Heizelement 2 vorgesehen, welches sich zentrisch und zum Rand der Auffangschale beabstandet parallel unterhalb des ersten elektrischen Heizelements 1 erstreckt. Das zweite elektrische Heizelement 2 weist eine elektrische Wärmeleistung auf, welche z.B. mit maximal ca. 1.000 W geringer als die maximale elektrische Wärmeleistung des ersten elektrischen Heizelements 1 ist. Die elektrische Wärmeleistung des zweiten elektrischen Heizelements 2 ist über ein separates Thermostat 4 am gemeinsamen Bedienteil 3 vom Benutzer einstellbar.

Wird das zweite elektrische Heizelement 2 zusätzlich zum ersten elektrischen Heizelement 1 betrieben, so wird damit die elektrische Wärmeleistung in diesem Bereich des Grillrosts 6, welcher als zweite Grillzone B bezeichnet werden kann, entsprechend erhöht. Diese resultierende elektrische Wärmeleistung der zweiten Grillzone B des Grillrosts 6 kann als zweite elektrische Wärmeleistung bezeichnet werden. Die elektrische Wärmeleistung der ersten Grillzone A des Grillrosts 6 bleibt dabei unverändert.

Auf diese Art und Weise können erfindungsgemäß verschiedene Lebensmittel, welche unterschiedlich hohe Temperaturen zur Zubereitung erfordern, zeitgleich mittels desselben erfindungsgemäßen elektrischen Grillgeräts zubereitet werden. Beispielsweise kann in der zweiten Grillzone B des Grillrosts 6 Fleisch zubereitet werden, da dieses höhere Temperaturen erfordert, welche mittels der höheren zweiten elektrischen Wärmeleistung dort erreicht werden können, welche aus dem zusätzlichen Betrieb des zweiten elektrischen Heizelements 2 resultieren. Gleichzeitig kann in der verbleibenden ersten Grillzone A des Grillrosts 6, welche die geringere erste elektrische Wärmeleistung aufweist, welche lediglich durch das erste elektrischen Heizelement 1 erzeugt wird, Lebensmittel zubereitet werden, welche eine geringere Temperatur als Fleisch benötigen bzw. für welche die Temperaturen, welche zur Zubereitung von Fleisch vorteilhaft sind, sogar schädlich sein können.

Somit können in unterschiedlichen Grillzonen A, B des Grillrosts 6 eines erfindungsgemäßen elektrischen Grillgeräts durch einen Benutzer zeitgleich verschiedene Lebensmittel mit unterschiedlichen Anforderungen an ihre Zubereitungstemperatur mit entsprechend unterschiedlichen Temperaturen zubereitet werden. Dies kann das Ergebnis der Zubereitung verbessern bzw. überhaupt erst erreichbar machen. Auch kann der Aufwand für den Benutzer gering gehalten werden.

Es sei angemerkt, dass auch lediglich das zweite elektrische Heizelement 2 betrieben werden kann. Da dies in der maximalen elektrischen Wärmeleistung schwächer als das erste elektrische Heizelement 1 ausgelegt ist, kann dies z.B. zur Nutzung einer Warmhaltefunktion auf lediglich geringer Fläche nützlich sein.

Mit anderen Worten betrifft die vorliegende Patentanmeldung die folgende Erfindung:
Die Erfindung betrifft einen elektrischen Grill zur Zubereitung von Lebensmitteln wie Fisch, Fleisch oder Gemüse, zumindest bestehend aus einem Grillrost, elektrischen Heizelementen und einer Auffangschale.

Elektrische Grillgeräte üblicher Bauart bestehen üblicherweise aus einem rahmenartigen Basisteil in das eine wannenartige Schale gehängt werden kann. In diese Schale kann ein beispielsweise geschlängeltes Heizelement eingehängt werden. Oberhalb des Heizelements ist üblicherweise ein Grillrost angeordnet. In die wannenartige Schale kann Wasser als Kühlmittel zur Vermeidung von Überhitzung eingebracht werden. Weiter verhindert das eingebrachte Wasser eine Entzündung abtropfenden Fettes.

Weiter sind im Stand der Technik ähnliche Grills bekannt, welche ein Thermostat aufweisen um die Temperatur der Heizelemente zu regeln. Das Thermostat befindet sich üblicherweise in einem mit dem Heizelement verbundenen Bedienteil. Das Heizelement wird üblicherweise in Form eines Rohrheizkörpers ausgebildet.

Bei der Zubereitung von Fleisch und ähnlichen Lebensmitteln ist häufig eine hohe Temperatur erforderlich. Lebensmittel wie beispielsweise Brot erfordern wiederum geringere Temperaturen in ihrer Zubereitung. Grillgeräte üblicher Bauform haben keine Möglichkeit verschiedene Temperaturen in unterschiedlichen Zonen der Grillfläche auszuprägen und somit ist die gleichzeitige Zubereitung von Lebensmitteln mit unterschiedlichen Anforderungen an Ihre Zubereitungstemperatur nicht möglich. Dieses Problem wird mit den im Aspekt 1 aufgeführten Merkmalen gelöst. Mit der Erfindung wird erreicht, dass für verschiedene Bereiche der Grillfläche unterschiedliche Temperaturen eingestellt werden können. Das wird erreicht, in dem im Zentrum der Grillfläche ein zweites, zusätzliches Heizelement angebracht ist.

Bekannte elektrische Grillgeräte sind in Ihrer Leistung und Wärmeentwicklung dadurch beschränkt, dass das rahmenartigen Basisteil als leicht berührbare Fläche in seiner Oberflächentemperatur durch entsprechende Sicherheitsnormen beschränkt ist. Eine Hohe Grilltemperatur kann schnell zu einer Überhitzung führen. Hohe Temperaturen sind beispielsweise bei der Zubereitung von Fleisch erforderlich. Um ideale Grilltemperaturen auf der gesamten Grillfläche zu erreichen wäre eine sehr hohe elektrische Wärmeleistung nötig und das Basisteil würde gefährlich heiß werden. Dieses Problem wird mit den im Aspekt 2 aufgeführten Merkmalen gelöst. Hohe Grilltemperaturen würden lediglich im Zentrum der Grillfläche entstehen. Mit ausreichendem Abstand zum Basisteil ist die Gefahr einer Überhitzung deutlich geringer.

Eine vorteilhafte Ausgestaltung der Erfindung ist im Schutzanspruch 3 dargestellt. Ein Ausführungsbeispiel der Erfindung wird anhand der Fig. 1 bis Fig. 3 erläutert. Es zeigen:
- Fig. 1:: Vollständig montierter Grill
- Fig. 2:: Explosionsdarstellungen der Hauptbestandteile

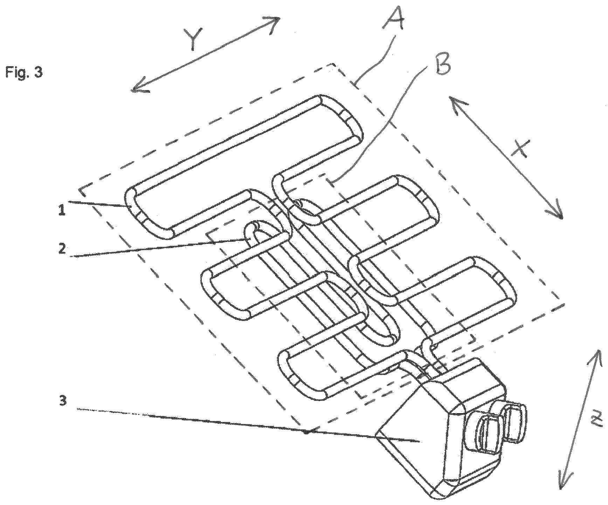

- Fig. 3:: Bedienteil mit Rohrheizkörpern als entnehmbare Einheit

In den Figuren ist das Bedienteil 3 mit den Rohrheizkörpern 1 und 2 dargestellt. Diese Teile ergeben zusammen eine einnehmbare Einheit. Der Rohrheizkörper 1 ist für die Erwärmung der gesamten Grillfläche verantwortlich und kann über ein Thermostat oder Schalter eingeschaltet werden. Diese Heizung ist eher für geringere bis mittlere Grilltemperaturen ausgelegt und hat beispielsweise eine Leistung von 2000 Watt. Hohe Temperaturen werden durch den Rohrheizkörper 2 erreicht. Dieser kann bei Bedarf zugeschaltet werden und hat beispielsweise 1000 Watt Leistung. Dabei entsteht ein besonders heißer Grillbereich mit einem ausreichenden Abstand zur Basis 5, um diese nicht so stark zu erhitzen dass die berührbaren Oberflächen eine Gefahr für den Bediener darstellen. Die Leistungsdichte sollte vorzugsweise bei dem Rohrheizkörper 2 größer sein als beim Rohrheizkörper 1.

### Weitere Aspekte der Erfindung:

1. Elektrisches Grillgerät mit unterschiedlich heißen Bereichen zur Zubereitung von Lebensmitteln auf einem Grillrost, dadurch gekennzeichnet, dass unterhalb des Grillrosts (6) mindestens zwei Rohrheizkörper mit unterschiedlicher Leistung parallel übereinander positioniert sind, wobei der kleinere Rohrheizkörper (2) vorzugsweise zentrisch zum größeren Rohrheizkörper (1) ausgerichtet ist.
2. Elektrisches Grillgerät nach Aspekt 1, dadurch gekennzeichnet, dass die Rohrheizkörper (1) und (2) separat voneinander einschaltbar sind.
3. Elektrisches Grillgerät nach einem der vorhergehenden Aspekte, dadurch gekennzeichnet, dass die Rohrheizkörper (1) und (2) mit einem Bedienteil (3) eine entnehmbare Einheit bilden, welche in das Basisteil (5) unterhalb des Grillrosts (6) eingehängt werden kann.

### BEZUGSZEICHENLISTE (Teil der Beschreibung)

- A: erste Grillzone des Grillrosts 6 mit erstem elektrischen Heizelement 1
- B: zweite Grillzone des Grillrosts 6 mit erstem elektrischen Heizelement 1und mit zweitem elektrischen Heizelement 2

- X: Längsrichtung; Tiefe
- Y: Querrichtung; Breite
- Z: vertikale Richtung; Höhe

- 1: erstes elektrisches Heizelement; großer Rohrheizkörper für die gesamte Grillfläche als erste Grillzone A des Grillrosts 6
- 2: zweites elektrisches Heizelement; kleiner, zusätzlicher Rohrheizkörper für einen besonders heißen Bereich der ersten Grillzone A des Grillrosts 6 als zweite Grillzone B des Grillrosts 6
- 3: Bedienteil mit Thermostaten 4 und festem Anschluss für beide Rohrheizkörper 1, 2
- 4: Thermostat
- 5: Basisteil und Auffangschale
- 6: Grillrost
- 7: Ständer

## Patentansprüche

1. Elektrisches Grillgerät
mit wenigstens einem Grillrost (6), welcher ausgebildet ist, Grillgut zur Zubereitung aufzunehmen,
mit wenigstens einem ersten elektrischen Heizelement (1), welches ausgebildet ist, wenigstens eine erste Grillzone (A) des Grillrosts (6) zumindest abschnittweise derart zu erwärmen, so dass das Grillgut in der ersten Grillzone (A) des Grillrosts (6) mit einer ersten elektrischen Wärmeleistung zubereitet werden kann, und
mit wenigstens einem zweiten elektrischen Heizelement (2),
wobei das erste elektrische Heizelement (1) und das zweite elektrische Heizelement (2) ausgebildet sind, wenigstens eine zweite Grillzone (B) des Grillrosts (6) zumindest abschnittweise gemeinsam derart zu erwärmen, so dass das Grillgut in der zweiten Grillzone (B) des Grillrosts (6) mit einer zweiten elektrischen Wärmeleistung zubereitet werden kann,
**dadurch gekennzeichnet, dass**
das zweite elektrische Heizelement (2) vollständig unterhalb oder oberhalb des ersten elektrischen Heizelements (1) angeordnet ist.

2. Elektrisches Grillgerät nach Anspruch 1, **dadurch gekennzeichnet, dass**
das zweite elektrische Heizelement (2) zumindest abschnittsweise, vorzugsweise vollständig, parallel zu dem ersten elektrische Heizelement (1) angeordnet ist.

3. Elektrisches Grillgerät nach einem der vorherigen Ansprüche, **dadurch gekennzeichnet, dass**
das zweite elektrische Heizelement (2) zumindest abschnittsweise zentrisch zu dem ersten elektrischen Heizelement (1) angeordnet ist.

4. Elektrisches Grillgerät nach einem der vorherigen Ansprüche, **dadurch gekennzeichnet, dass**
das zweite elektrische Heizelement (2) zumindest abschnittsweise zu einem Basisteil (5) des elektrischen Grillgeräts derart beabstandet angeordnet ist, so dass eine Überhitzung des Basisteils (5) durch den Betrieb des zweiten elektrischen Heizelements (2) verhindert werden kann.

5. Elektrisches Grillgerät nach einem der vorherigen Ansprüche, **dadurch gekennzeichnet, dass**
das erste elektrische Heizelement (1) und/oder das zweite elektrische Heizelement (2) als Rohrheizkörper (1; 2) ausgebildet ist/sind.

6. Elektrisches Grillgerät nach einem der vorherigen Ansprüche, **dadurch gekennzeichnet, dass**
das erste elektrische Heizelement (1) und/oder das zweite elektrische Heizelement (2) lediglich ein-/ausschaltbar ausgebildet ist/sind.

7. Elektrisches Grillgerät nach einem der vorherigen Ansprüche, **dadurch gekennzeichnet, dass**
das erste elektrische Heizelement (1) und/oder das zweite elektrische Heizelement (2), vorzugsweise mittels jeweils eines Thermostaten (4), in der Wärmeleistung einstellbar ausgebildet ist/sind.

8. Elektrisches Grillgerät nach einem der vorherigen Ansprüche, **dadurch gekennzeichnet, dass**
das erste elektrische Heizelement (1) und das zweite elektrische Heizelement (2) ausgebildet sind, unabhängig voneinander betrieben werden zu können.

9. Elektrisches Grillgerät nach einem der vorherigen Ansprüche, **dadurch gekennzeichnet, dass**
das erste elektrische Heizelement (1) und das zweite elektrische Heizelement (2) zur Erzeugung der gleichen elektrischen Wärmeleistung ausgebildet sind.

10. Elektrisches Grillgerät nach einem der Ansprüche 1 bis 8, **dadurch gekennzeichnet, dass**
das erste elektrische Heizelement (1) und das zweite elektrische Heizelement (2) zur Erzeugung unterschiedlicher elektrischen Wärmeleistungen ausgebildet sind.

11. Elektrisches Grillgerät nach Anspruch 10, **dadurch gekennzeichnet, dass**
das zweite elektrische Heizelement (2) zur Erzeugung einer geringeren elektrischen Wärmeleistung als das erste elektrische Heizelement (1) ausgebildet ist.

12. Elektrisches Grillgerät nach einem der vorherigen Ansprüche, **dadurch gekennzeichnet, dass**
das erste elektrische Heizelement (1) und das zweite elektrische Heizelement (2), vorzugsweise mit einem gemeinsamen Bedienteil (3), eine entnehmbare Einheit bilden, welche ausgebildet ist, in ein Basisteil (5) des elektrischen Grillgeräts eingehängt zu werden.

## Claims

1. Electric grill device comprising at least one grill grate (6) which is designed to receive food to be grilled for preparation, comprising at least one first electric heating element (1) which is designed to heat at least one first grill zone (A) of the grill grate (6) at least in portions such that the food to be grilled in the first grill zone (A) of the grill grate (6) can be prepared using a first electric heat output, and comprising at least one second electric heating element (2), the first electric heating element (1) and the second electric heating element (2) being designed to together heat at least one second grill zone (B) of the grill grate (6) at least in portions such that the food to be grilled in the second grill zone (B) of the grill grate (6) can be prepared using a second electric heat output, **characterized in that** the second electric heating element (2) is arranged completely below or above the first electric heating element (1).

2. Electric grill device according to claim 1, **characterized in that** the second electric heating element (2) is arranged, at least in portions, preferably completely, parallel to the first electric heating element (1).

3. Electric grill device according to either of the preceding claims, **characterized in that** the second electric heating element (2) is arranged, at least in portions, centrally with respect to the first electric heating element (1).

4. Electric grill device according to any of the preceding claims, **characterized in that** the second electric heating element (2) is arranged, at least in portions, so as to be spaced apart from a base part (5) of the electric grill device such that overheating of the base part (5) caused by the second electric heating element (2) being operated can be prevented.

5. Electric grill device according to any of the preceding claims, **characterized in that** the first electric heating element (1) and/or the second electric heating element (2) is/are designed as tubular heating bodies (1; 2).

6. Electric grill device according to any of the preceding claims, **characterized in that** the first electric heating element (1) and/or the second electric heating element (2) is/are only designed to be able to be switched on/off.

7. Electric grill device according to any of the preceding claims, **characterized in that** the first electric heating element (1) and/or the second electric heating element (2) is/are designed to be adjustable in terms of heat output, preferably in each case by means of a thermostat (4).

8. Electric grill device according to any of the preceding claims, **characterized in that** the first electric heating element (1) and the second electric heating element (2) are designed to be able to be operated independently of one another.

9. Electric grill device according to any of the preceding claims, **characterized in that** the first electric heating element (1) and the second electric heating element (2) are designed to generate the same electric heat output.

10. Electric grill device according to any of claims 1 to 8, **characterized in that** the first electric heating element (1) and the second electric heating element (2) are designed to generate different electric heat outputs.

11. Electric grill device according to claim 10, **characterized in that** the second electric heating element (2) is designed to generate a lower electric heat output than the first electric heating element (1).

12. Electric grill device according to any of the preceding claims, **characterized in that** the first electric heating element (1) and the second electric heating element (2), preferably together with a common operating part (3), form a removable unit which is designed to be mounted in a base part (5) of the electric grill device.

## Revendications

1. Barbecue électrique comportant au moins une grille de grillades (6) conçue pour recevoir un aliment à griller, comportant au moins un premier élément chauffant électrique (1) destiné à chauffer au moins partiellement une première zone de rôtissage (A) de la grille de grillades (6) de sorte que l'aliment à griller peut être préparé dans la première zone de rôtissage (A) de la grille de grillades (6) à une première puissance thermique électrique, et à l'aide d'au moins un second élément chauffant électrique (2), le premier élément chauffant électrique (1) et le second élément chauffant électrique (2) étant conçus pour chauffer ensemble, au moins partiellement, au moins une seconde zone de rôtissage (B) de la grille de grillades (6) de sorte que l'aliment à griller peuvent être préparés dans la seconde zone de rôtissage (B) de la grille du grillades (6) à une seconde puissance thermique électrique, **caractérisé en ce que** le second élément chauffant électrique (2) est disposé entièrement en dessous ou au-dessus du premier élément chauffant électrique (1).

2. Barbecue électrique selon la revendication 1, **caractérisé en ce que** le second élément chauffant électrique (2) est disposé au moins partiellement, de préférence entièrement, de manière parallèle au premier élément chauffant électrique (1).

3. Barbecue électrique selon l'une des revendications précédentes, **caractérisé en ce que** le second élément chauffant électrique (2) est disposé au moins partiellement de manière centrée par rapport au premier élément chauffant électrique (1).

4. Barbecue électrique selon l'une des revendications précédentes, **caractérisé en ce que** le second élément chauffant électrique (2) est disposé au moins partiellement à distance d'une partie de base (5) du barbecue électrique de sorte qu'une surchauffe de la partie de base (5) peut être empêchée par le fonctionnement du second élément chauffant électrique (2).

5. Barbecue électrique selon l'une des revendications précédentes, **caractérisé en ce que** le premier élément chauffant électrique (1) et/ou le second élément chauffant électrique (2) est/sont conçu(s) sous la forme d'un corps chauffant tubulaire (1 ; 2).

6. Barbecue électrique selon l'une des revendications précédentes, **caractérisé en ce que** le premier élément chauffant électrique (1) et/ou le second élément chauffant électrique (2) est/sont conçu(s) uniquement de manière commutable entre un état d'activation et un état de désactivation.

7. Barbecue électrique selon l'une des revendications précédentes, **caractérisé en ce que** le premier élément chauffant électrique (1) et/ou le second élément chauffant électrique (2) est/sont réglable(s) en ce qui concerne la puissance thermique, de préférence au moyen d'un thermostat (4).

8. Barbecue électrique selon l'une des revendications précédentes, **caractérisé en ce que** le premier élément chauffant électrique (1) et le second élément chauffant électrique (2) sont conçus pour être mis en marche indépendamment l'un de l'autre.

9. Barbecue électrique selon l'une des revendications précédentes, **caractérisé en ce que** le premier élément chauffant électrique (1) et le second élément chauffant électrique (2) sont conçus pour générer la même puissance thermique électrique.

10. Barbecue électrique selon l'une des revendications 1 à 8, **caractérisé en ce que** le premier élément chauffant électrique (1) et le second élément chauffant électrique (2) sont conçus pour générer des puissances thermiques électriques différentes.

11. Barbecue électrique selon la revendication 10, **caractérisé en ce que** le second élément chauffant électrique (2) est conçu pour générer une puissance thermique électrique inférieure à celle du premier élément chauffant électrique (1 ).

12. Barbecue électrique selon l'une des revendications précédentes, **caractérisé en ce que** le premier élément chauffant électrique (1) et le second élément chauffant électrique (2), comportant de préférence une partie de commande commune (3), forment une unité amovible conçue pour être suspendue dans une partie de base (5) du barbecue électrique.
